(19) Europäisches Patentamt

European Patent Office

Office européen des brevets

(11) **EP 1 010 577 A2**

(12) **EUROPÄISCHE PATENTANMELDUNG**

(43) Veröffentlichungstag:
21.06.2000 Patentblatt 2000/25

(51) Int Cl.⁷: **B60Q 1/12**

(21) Anmeldenummer: 99122368.6

(22) Anmeldetag: 10.11.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **17.12.1998 DE 19858297**

(71) Anmelder: **DaimlerChrysler AG**
**70567 Stuttgart (DE)**

(72) Erfinder:
• **Kull, Wolfgang**
**73765 Neuhausen (DE)**
• **Lauer, Wolfgang**
**74074 Heilbronn (DE)**
• **Reichmann, Thomas**
**73072 Donzdorf (DE)**

(54) **Verfahren zur Korrektur eines Signals wenigstens eines Sensors, aufgrund dessen eine Bahnkurve ermittelbar ist, auf der sich das Fahrzeug bewegt**

(57) Die vorliegende Erfindung betrifft ein Verfahren zur Korrektur eines Signals wenigstens eines Sensors, aufgrund dessen eine Bahnkurve ermittelbar ist, auf der sich das Fahrzeug bewegt, wobei das Fahrzeug eine Einrichtung aufweist, mit der die Umgebung des Fahrzeuges erkannt werden kann und wobei die Korrektur des Signals des wenigstens einen Sensors erfolgt, indem zu wenigstens einem Zeitpunkt der zu wenigstens einem weiteren Zeitpunkt erwartete Objektort eines als stehend erkannten Objektes bestimmt wird anhand der Fahrzeuggeschwindigkeit und des Signals des wenigstens einen Sensors und indem zu dem wenigstens einen weiteren Zeitpunkt der Objektort des als stehend erkannten Objektes aufgenommen wird, wobei eine Korrektur des Signals des wenigstens einen Sensors anhand der Abweichung des erwarteten Objektortes von dem aufgenommenen Objektort erfolgt.

**EP 1 010 577 A2**

EP 1 010 577 A2

**Beschreibung**

Die vorliegende Erfindung betrifft ein Verfahren zur Korrektur eines Signals wenigstens eines Sensors, aufgrund dessen eine Bahnkurve ermittelbar ist, auf der sich das Fahrzeug bewegt, nach dem Oberbegriff des Patentanspruches 1.

Es sind Systeme bekannt, bei denen die Umgebung des Fahrzeuges - beispielsweise mittels Radarstrahlen - ausgewertet wird, um eine Geschwindigkeitsregelung des Fahrzeuges durchzuführen. Gegebenenfalls sollen auch Lenkbewegungen des Fahrzeuges im Zuge einer solchen Regelung selbsttätig, d.h. ohne Eingriff des Fahrzeugführers durchgeführt werden. Dabei erfolgt eine Orientierung einerseits an als stehend erkannten Objekten der Umgebung sowie andererseits an anderen Fahrzeugen. Dabei ist es wichtig, bei vorausfahrenden Fahrzeugen zu erkennen, ob diese auf derselben Fahrspur fahren wie das eigene Fahrzeug oder auf einer benachbarten Fahrspur. Wenn diese Fahrspurzuordnung falsch erfolgt, kann es einerseits passieren, daß eine unnötige Warnung des Fahrzeugführers des eigenen Fahrzeuges erfolgt bzw. eine unnötige Abbremsung des eigenen Fahrzeuges, wenn ein auf einer benachbarten Fahrspur langsamer fahrendes Fahrzeug als auf der eigenen Fahrspur fahrend erkannt wird. Andererseits kann eine Warnung des Fahrzeugführers bzw. eine Abbremsung des Fahrzeuges zu spät oder gar nicht erfolgen, wenn ein auf der eigenen Fahrspur langsamer voraus fahrendes Fahrzeug als auf einer benachbarten Fahrspur fahrend erkannt wird. Es ist also wesentlich, die eigene Fahrtrichtung bezogen auf andere Objekte richtig zuzuordnen. Dazu ist eine möglichst fehlerfreie Erfassung der Bahnkurve notwendig, auf der sich das Fahrzeug bewegt.

Es ist Aufgabe der vorliegenden Erfindung, eine Korrektur eines Signals vorzunehmen, aufgrund dessen eine Bahnkurve ermittelbar ist, auf der sich das Fahrzeug bewegt.

Diese Aufgabe wird erfindungsgemäß gelöst, indem das Fahrzeug eine Einrichtung aufweist, mit der die Umgebung des Fahrzeuges erkannt werden kann und indem die Korrektur des Signals des wenigstens einen Sensors erfolgt, indem zu wenigstens einem Zeitpunkt der zu wenigstens einem weiteren Zeitpunkt erwartete Objektort eines als stehend erkannten Objektes bestimmt wird anhand der Fahrzeuggeschwindigkeit und des Signals des wenigstens einen Sensors und indem zu dem wenigstens einen weiteren Zeitpunkt der Objektort des als stehend erkannten Objektes aufgenommen wird, wobei eine Korrektur des Signals des wenigstens einen Sensors anhand der Abweichung des erwarteten Objektortes von dem aufgenommenen Objektort erfolgt.

Durch dieses Verfahren können vorteilhaft statische Abweichungen, beispielsweise aufgrund einer Verstellung der Spur des Fahrzeuges, ausgeglichen werden.

Indem ausgehend von einem Zeitpunkt der erwartete Objektort zu einem weiteren Zeitpunkt mittels der Fahrzeuggeschwindigkeit und des Signals des wenigstens einen Sensors bestimmt wird, kann dieser Objektort mit dem zu dem weiteren Zeitpunkt gemessenen, d.h. aufgenommenen Objektort verglichen werden.

Bei dem Verfahren nach Anspruch 2 erkennt die Einrichtung die Umgebung mittels Radarstrahlen.

Derartige Einrichtungen sind bekannt und bereits in Erprobung. Mittels derartiger Einrichtungen läßt sich die Umgebung hinsichtlich beweglicher und stehender Objekte gut erkennen. Außerdem werden derartige Einrichtungen bevorzugt in den eingangs beschriebenen Systemen verwendet, bei denen eine Geschwindigkeitsregelung und/oder eine Lenkungsregelung des Fahrzeuges ohne Eingriff des Fahrzeugführers erfolgen soll. Die Einrichtung kann dann sowohl zur Regelung selbst als auch zum Abgleich des Sensors bzw. der Sensoren verwendet werden, aus deren Signal die Bahnkurve des Fahrzeuges ermittelt wird.

Bei dem Verfahren nach Anspruch 3 wird wenigstens ein Parameter einer Bahnkurve für die Abweichung der Kurve der erwarteten Objektorte von den aufgenommenen Objektorten bestimmt. Anhand dieses wenigstens einen Parameters kann ein Offset für das Signal des wenigstens einen Sensors bestimmt werden.

Durch Verwendung mehrerer Objektorte lassen sich statistische Schwankungen ausgleichen, die sich in fehlerhaften Meßergebnissen ausdrücken. Wenn die Bahnkurve beispielsweise durch ein Polynom n-ten Grades beschrieben wird, erhält man ein überbestimmtes Gleichungssystem, sofern die Zahl der bei der Berechnung der Parameter verwendeten Objektorte größer ist als n+1. Es hat sich als vorteilhaft erwiesen, für die Bahnkurve ein Polynom 2-ten Grades anzunehmen. Dabei braucht durch eine geeignete Wahl des Koordinatensystems nur der Parameter des quadratischen Terms bestimmt zu werden. Das überbestimmte Gleichungssystem kann beispielsweise mit der Methode der kleinsten Fehlerquadrate ausgewertet werden.

Bei dem Verfahren nach Anspruch 4 wird zu einem Satz von erwarteten und aufgenommenen Objektorten der wenigstens eine Parameter bestimmt. Weiterhin werden zu mehreren Sätzen von erwarteten und aufgenommenen Objektorten bestimmte Parameter gemittelt.

Dadurch können statistische Schwankungen bei der Bestimmung der Parameter ausgeglichen werden.

Bei dem Verfahren nach Anspruch 5 wird der zu einem Satz von erwarteten und aufgenommenen Objektorten bestimmte wenigstens eine Parameter zumindest bei Überschreitung eines gewissen Grenzwertes durch den wenigstens einen Parameter mit einer Gewichtung bei der Mittelung berücksichtigt wird.

Durch diese Gewichtung kann eine Bewertung erfolgen, wie zuverlässig der zu einem Satz von erwarteten und aufgenommen Objektorten bestimmte wenigstens eine Parameter ist. Wenn sich aufgrund des Wertes des bestimmten wenigstens einen Parameters ein entsprechend große Korrektur ergeben würde, kann dieser Parameter beispielsweise mit geringer Gewichtung berücksichtigt werden, um zunächst zu warten, ob sich dieser Wert des wenigstens einen Parameters bei weiteren Sätzen von erwarteten und aufgenommenen Objektorten bestätigt. Dabei können vorteilhaft Fehler ausgeglichen werden, wenn bei zeitlich aufeinander folgenden Messungen erkannte Objektorte einem bestimmten Objekt zugeordnet werden, zu dem bereits Objektorte ermittelt wurden, wobei es sich aber eventuell um mehrere Objekte handelt, die vergleichsweise dicht beieinander liegen und bei einzelnen Messungen eventuell abgedeckt sind, so daß die zugeordneten Objektorte tatsächlich nicht demselben Objekt entsprachen.

Die Gewichtung kann beispielsweise so vorgenommen werden, daß der wenigstens eine Parameter mit abnehmender Gewichtung bei der Mittelung berücksichtigt wird, wenn der Parameter den gewissen Grenzwert überschreitet. Der Parameter kann auch unberücksichtigt bleiben, wenn er den gewissen Grenzwert überschreitet. Ebenso ist es auch möglich, einen stetig diffenzierbaren Verlauf eines Faktors der Gewichtung vorzusehen, wobei dieser Faktor abnimmt abhängig von dem Wert des Parameters in Relation zu einem gewissen Grenzwert.

Bei dem Verfahren nach Anspruch 6 wird zumindest bei Überschreitung einer Grenze durch einen Fehler ($\Delta y$), der sich als Abweichung der Bahnkurve aus den erwarteten und/oder aufgenommenen Objektorten zu der mit dem wenigstens einen Parameter berechneten Bahnkurve ergibt, der wenigstens eine Parameter mit einer Gewichtung bei der Mittelung berücksichtigt wird.

Dadurch kann vorteilhaft berücksichtigt werden, inwieweit sich Abweichungen ergeben zwischen dem Mittelwert, der sich auf der Bahnkurve anhand des wenigstens einen berechneten Parameters ergibt, und den erwarteten und/oder aufgenommen Objektorten. Bei einer zu starken Abweichung kann dann beispielsweise eine entsprechend schwächere Gewichtung des Parameters vorgenommen werden.

Die Gewichtung kann beispielsweise so vorgenommen werden, daß der wenigstens eine Parameter mit abnehmender Gewichtung bei der Mittelung berücksichtigt wird, wenn der Fehler $\Delta y$ die Grenze überschreitet. Der Parameter kann auch unberücksichtigt bleiben, wenn der Fehler $\Delta y$ die Grenze überschreitet. Ebenso ist es auch möglich, einen stetig diffenzierbaren Verlauf eines Faktors der Gewichtung vorzusehen, wobei dieser Faktor abnimmt abhängig von dem Wert des Fehlers $\Delta y$ in Relation zu einer Grenze.

Bei dem Verfahren nach Anspruch 7 erfolgt bei der Mittelung eine statistische Fehlerbetrachtung, wobei bei Überschreiten eines Grenzwertes durch den Fehler der Korrekturwert ungültig wird und/oder ein Warnsignal ausgegeben wird.

Dadurch kann vorteilhaft erkannt werden, ob die Werte des wenigstens einen Parameters, die zu den einzelnen Sätzen von erwarteten und aufgenommenen Objektorten ermittelt wurden, zu stark voneinander abweichen, so daß eventuell Unsicherheiten hinsichtlich der Zuverlässigkeit des sich ergebenden Korrekturwertes bestehen.

Bei dem Verfahren nach Anspruch 8 wird der wenigstens eine Parameter innerhalb eines Satzes nur dann bestimmt, wenn der maximale Betrag der Änderung des Signals des wenigstens einen Sensors während dieses Satzes kleiner ist als ein bestimmter Schwellwert.

Bei einer Änderung des Signals des wenigstens einen Sensors oberhalb eines Schwellwertes während der Dauer der Auswertung ändern sich die aufgenommenen Objektorte gegenüber den zu früheren Zeitpunkten ermittelten erwarteten Objektorten schon aufgrund der Änderung des Signals. Da es sich hierbei aber nicht um Änderungen handelt, die auf statische Abweichungen beispielsweise aufgrund einer veränderten Spureinstellung des Fahrzeuges zurückzuführen sind, wird in diesem Falle die Auswertung innerhalb dieses Satzes abgebrochen. Der bestimmte Schwellwert kann etwa 5° betragen, wenn das Signal des wenigstens einen Sensors der Lenkwinkel ist.

Bei dem Verfahren nach Anspruch 9 wird der wenigstens eine Parameter innerhalb eines Satzes nur dann bestimmt, wenn der maximale Betrag des Signals des wenigstens einen Sensors während dieses Satzes kleiner ist als ein bestimmter Grenzwert.

Es hat sich gezeigt, daß oberhalb eines bestimmten Grenzwertes des Signals des wenigstens einen Sensors die Bestimmung der Parameter mit Fehlern behaftet ist. Vorteilhaft wird daher die Bestimmung des wenigstens einen Parameters nicht durchgeführt, wenn beispielsweise das Signal des wenigstens einen Sensors der Spurwinkel des Fahrzeuges ist und dessen Betrag größer ist als ein bestimmter Grenzwert. Der bestimmte Grenzwert kann in diesem Fall etwa 7,5° betragen. Beispielsweise kann bei enger Kurvenfahrt der Kurvenkrümmungsfehler verursacht durch einen Spurwinkelfehler kleiner sein als die Meßgenauigkeit des Sensors, mit welchem die Objekte erfaßt werden. In diesem Fall ist dann eine Offset-Fehlererkennung nicht mehr möglich.

Weiterhin vereinfacht sich die Signalauswertung, weil fahrdynamische Einflüsse wie beispielsweise der Eigenlenkgradient bei diesen Fahrbedingungen in fahrdynamischen Gleichungen vernachlässigt werden können.

Bei dem Verfahren nach Anspruch 10 repräsentiert das Signal des wenigstens einen Sensors den Spurwinkel des Fahrzeuges. Dieser wird aus dem gemessenen Lenkwinkel abgeleitet, wobei die Korrektur erfolgt, indem ein Offset addiert wird.

Der Lenkwinkel ist eine vergleichsweise einfach meßbare Größe. Es kann also aus dieser Meßgröße das Signal abgeleitet werden, das den Spurwinkel des Fahrzeuges repräsentiert.

Bei dem Verfahren nach Anspruch 11 wird ein Warnsignal ausgegeben, wenn der Betrag des ermittelten Wertes des Offsets eine bestimmte Schwelle überschreitet.

In diesem Fall kann auf einen Fehler geschlossen werden, weil sich beispielsweise die Spur des Fahrzeuges so weit verstellt hat, daß diese korrigiert werden muß.

Bei dem Verfahren nach Anspruch 12 ist die Entfernung zu dem als stehend erkannten Objekt größer als eine bestimmte Mindestentfernung.

Bei dem Verfahren nach Anspruch 13 ist die Entfernung zu dem als stehend erkannten Objekt geringer als eine bestimmte Maximalentfernung.

Für die Mindestentfernung hat sich ein Wert von etwa 15m als geeignet erwiesen, für die Maximalentfernung ein Wert von etwa 120m. Bei Entfernungen oberhalb der Maximal entfernung werden die Änderungen der Winkel, unter denen das als stehend erkannte Objekt beobachtet wird, zu gering. Bei einer zu geringen Entfernung (unterhalb der Mindestentfernung) ist die Änderung dieser Winkel zu groß. Als besonders vorteilhaft hat es sich erwiesen, den Entfernungsbereich zwischen 30m und 70m festzulegen.

Bei dem Verfahren nach Anspruch 14 wird die Bahnkurve aus einer Mindestanzahl von erwarteten und aufgenommenen Objektorten bestimmt bzw. ein Satz von erwarteten und aufgenommen Objektorten besteht aus einer Mindestanzahl von erwarteten und aufgenommenen Objektorten.

Dadurch ergibt sich statistisch ein aussagekräftigerer Wert.

Ein Ausführungsbeispiel der Erfindung ist in der Zeichnung näher dargestellt. Es zeigt dabei:

Fig. 1:     ein Ablaufdiagramm des erfindungsgemäßen Verfahrens,

Fig. 2:     eine Prinzipdarstellung der Bahnkurven des Fahrzeuges zur Bestimmung des bzw. der Parameter und

Fig. 3:     mehrere Objekte mit Objektorten in der Historie.

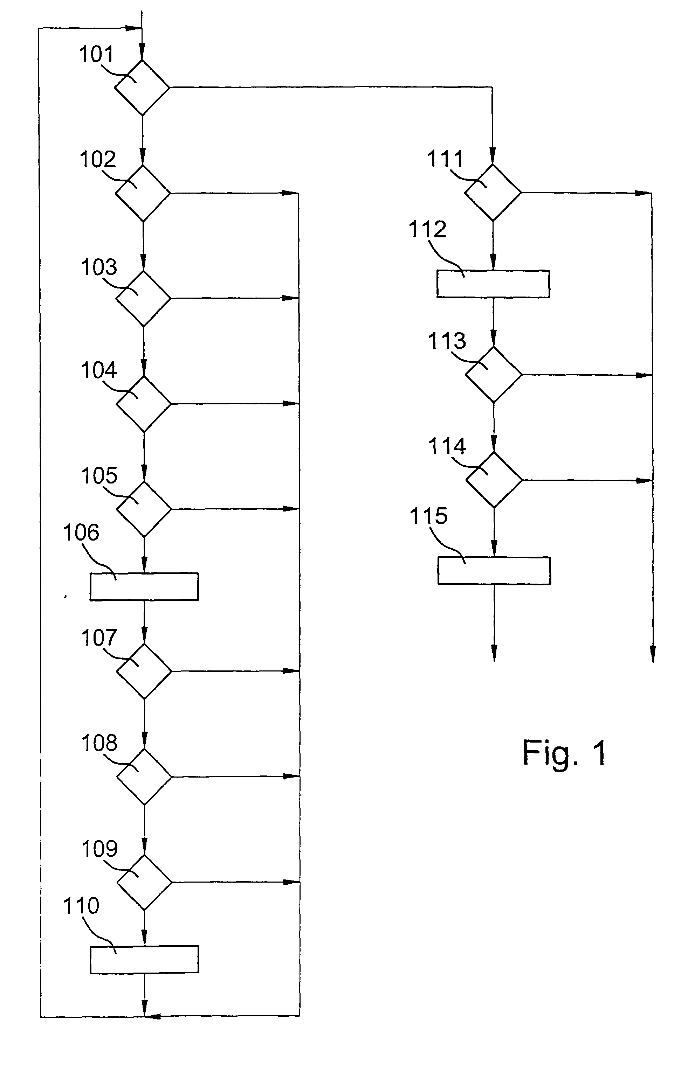

Gemäß Figur 1 wird in den Schritten 101 bis 110 zunächst ein Korrekturwert berechnet, der in den Schritten 111 bis 115 mit anderen ermittelten Korrekturwerten statistisch gemittelt und weiterverarbeitet wird.

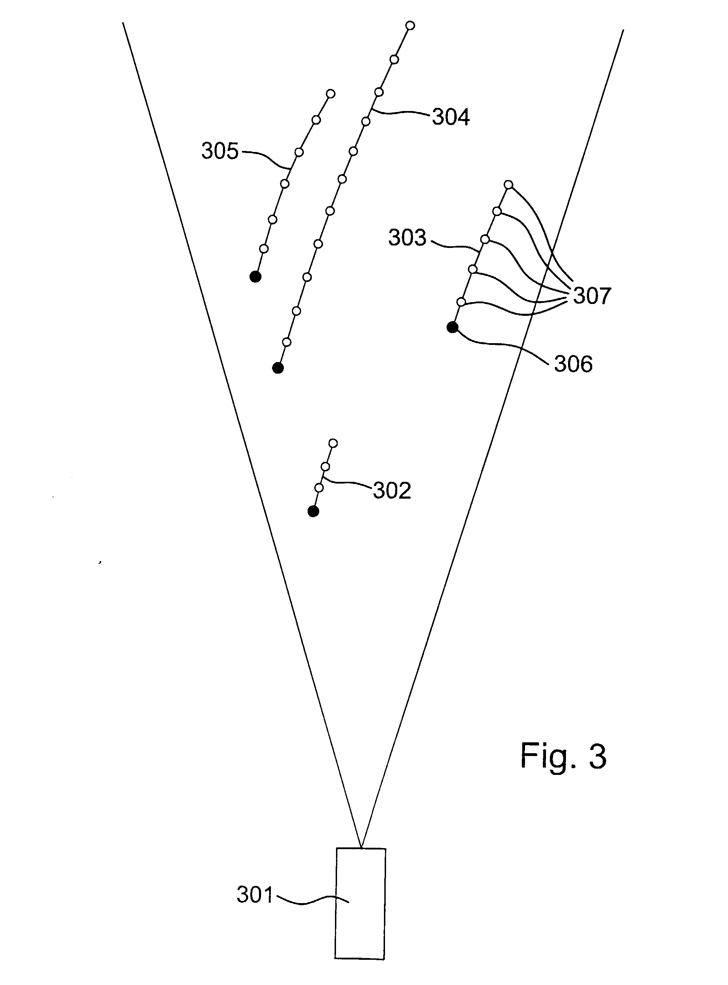

Zunächst wird in dem Schritt 101 geprüft, ob ein Satz von unabhängigen Objekten mit den in der Historie jeweils erwarteten und aufgenommenen Objektorten (Positionen) noch nicht vollständig ausgewertet worden ist (Figur 3). Wenn diese Objekte, das heißt die sich aus den einzelnen Sätzen von aufgenommenen Objektorten ergebenden Objektspuren, noch nicht vollständig ausgewertet worden sind, erfolgt ein Übergang zu dem Schritt 102, in dem überprüft wird, ob das verarbeitete Objekt als stehend erkannt worden ist. Die darauf folgenden Schritte 103 bis 110 werden dann für jedes als stehend erkannte Objekt mit zugehöriger Historie (erwarteten und aufgenommenen Objektorte eines Objekts bei vorangegangenen Messungen) bearbeitet.

Ist dies der Fall, erfolgt ein Übergang zu dem Schritt 103, in dem überprüft wird, ob sich das Objekt in einer geeigneten Entfernung vor dem Fahrzeug befindet. Diese Entfernung kann beispielsweise zwischen 30m und 70m liegen. Wenn dadurch die Zahl der Objekte zu stark beschränkt wird, kann dieser Entfernungsbereich beispielsweise auf 15m bis 120m ausgedehnt werden. Die approximierte Distanz muß sich also innerhalb einer bestimmten maximalen Entfernung und außerhalb einer bestimmten minimalen Entfernung befinden.

Wenn sich das Objekt also in einem entsprechenden Entfernungsbereich vor dem Fahrzeug befindet, erfolgt ein Übergang zu dem Schritt 104, in dem überprüft wird, ob der gemessene Lenkwinkel kleiner ist als ein vorgegebener Maximalwert, der beispielsweise 7,5° betragen kann. Der Betrag der zu korrigierenden Größe während der Erfassung der erwarteten und aufgenommenen Objektorte eines Satzes von erwarteten und aufgenommenen Objektorten soll also kleiner sein als ein bestimmter Grenzwert.

Ist dies der Fall, erfolgt ein Übergang zu dem Schritt 105, in dem überprüft wird, ob sich der Lenkwinkel während der Bestimmung der aufgenommenen und der erwarteten Objektorte eines Satzes von erwarteten und aufgenommenen Objektorten um mehr als einen bestimmten Betrag, beispielsweise 5° geändert hat. Der Betrag der Änderung der zu korrigierenden Größe während der Erfassung der erwarteten und aufgenommenen Objektorte eines Satzes von erwarteten und aufgenommenen Objektorten soll also kleiner sein als ein bestimmter Grenzwert.

In dem Schritt 106 wird aus der Abweichung des früher für den jetzigen Zeitpunkt ermittelten erwarteten Objektortes von dem aufgenommenen Objektort die Spurwinkelabweichung berechnet. Gleichzeitig werden mittels der Fahrzeuggeschwindigkeit und dem gemessenen Spurwinkel erwartete Objektorte für künftige Zeitpunkte errechnet. Die Berechnung der Spurwinkelabweichung kann auch erfolgen, indem die Daten eines Satzes gesammelt werden und mit der Methode der kleinsten Fehlerquadrate ausgewertet werden.

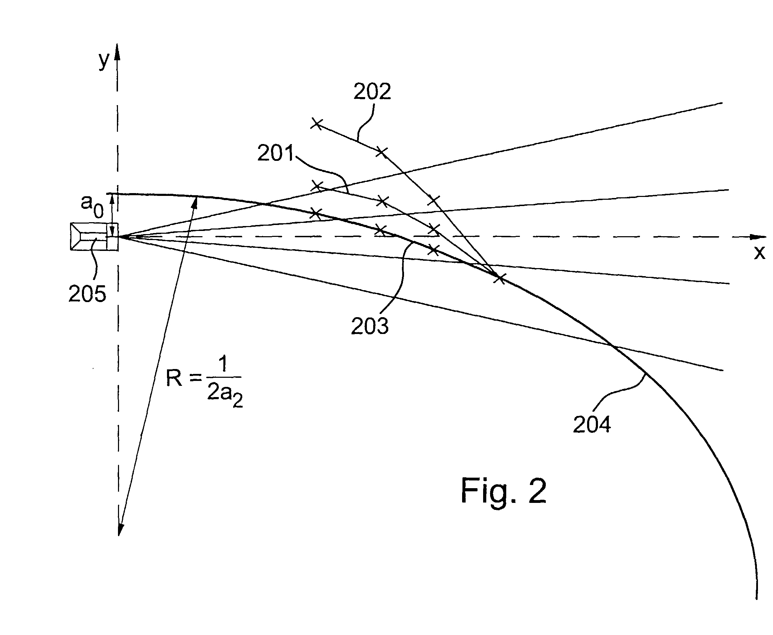

Figur 2 zeigt eine Prinzipdarstellung der Bahnkurven des Fahrzeuges 205 zur Bestimmung des bzw. der Parameter. Im folgenden soll die Korrektur im Schritt 106 beschrieben werden, wenn der Lenkwinkel gemessen wird. Bei den als stehend erkannten Objekten lassen sich über den Vergleich der aufgenommenen Objektspuren mit dem aktuellen Lenkwinkel Fehler im Lenkwinkel ermitteln und korrigieren. Dazu läßt sich eine Differenzspur $f_{Dif}$ 203 bilden aus der aufgenommenen (realen) Objektspur $f_R$ 201 und der erwarteten Objektspur $f_E$ 202, aus deren Krümmung die aktuelle Lenkwinkelabweichung ermittelt werden kann.

Die aufgenommene Objektspur $f_R$ 201 besteht aus einer Anzahl von Meßwerten für den Abstand $x_i$ und die 2blage $y_i$. Für die erwartete Objektspur $f_E$ 202 besteht die Annahme, daß sich das Objekt auf einer Kreisbahn mit der Krümmung des Lenkwinkel $a_{2,E}$ durch den Erfassungsraum des Radarsensors bewegt. Ausgehend von dem letzten errechneten Objektspurpunkt (erwarteten Objektort) wird mit Hilfe des aktuellen Lenkwinkels und einer Näherungsparabel ohne Linearterm der aktuelle Erwartungswert (erwartete Objektort) ermittelt.

$$f_E(X_{n,E}): \qquad y_{n,E} = a_{2,E} * (x_{n,E})^2 + a_{0,E}$$

Da nur die Größen $a_{2,E}$ und $x_{n,E}$ gegeben sind, muß $a_{0,E}$ mit Hilfe des vorherigen Stützpunktes ermittelt werden.

$$a_{0,E} = y_{n-1,E} - a_{2,E} * (x_{n-1,E})^2$$

Im weiteren ergibt sich dann für $y_{n,E}$ folgende Lösung:

$$y_{n,E} = a_{2,E} * (x_{n,E})^2 + y_{n-1,E} - a_{2,E} * (x_{n-1,E})^2$$

bzw.

$$y_{n,E} = a_{2,E} * ((x_{n,E})^2 - (x_{n-1,E})^2) + y_{n-1E}.$$

Die Differenzspur $f_{Dif}$ besitzt die gleichen x-Werte wie $f_R$ und $f_E$:

$$x_{i,Dif} = x_{i,R} = x_{i,E}$$

Die y-Werte ergeben sich aus der Differenz der beiden Spuren $f_R$ und $f_E$:

$$y_{i,Dif} - y_{i,R} - y_{i,E}.$$

In einem weiteren Schritt wird die Differenzspur $f_{Dif}$ beispielsweise durch ein Polynom 2. Grades der Form:

$$f_{approx}(x): \qquad y = a_2 * x^2 + a_1 * x + a_0$$

angenähert.

Der Parameter $a_0$ gibt nur den Abstand der Bahnkurve von der Fahrzeuglängsachse wieder (Siehe Figur 2). Der Linearterm $a_1$ ist unter normalen Fahrzuständen 0, da sonst das Fahrzeug driften würde. Der Parameter $a_2$ gibt die Krümmung der Differenzkurve wieder (Figur 2). Somit vereinfacht sich die zu approximierende Funktion, was gleichzeitig die Stabilität gegenüber Meßausreißern erhöht, auf folgende Form:

$$f_{approx}(x): \qquad y = a_2 * x^2 + a_0$$

Beispielsweise mittels der Methode kleinster Fehlerquadrate werden die Parameter so bestimmt, daß die Objektorte (die Wertepaare $x_{i,Diff}$ und $y_{i,Diff}$) möglichst optimal an die sich aus den Parametern ergebende Bahnkurve angenähert werden.

Für die Approximation können beispielsweise bis zu 50 Wertepaare mit einer minimalen Abstandsdifferenz von 3m verwendet werden.

Gegebenenfalls können diese Wertepaare unterschiedlich stark gewichtet werden.

Bei der Approximation kann auch ein mittlerer Fehler $\Delta y$ bestimmt werden. Der Fehler repräsentiert die mittlere Abweichung der Wertepaare von der approximierten Bahnkurve in y-Richtung. Zweckmäßigerweise wird der mittlere quadratische Fehler berechnet. Sollte der Berechnungsaufwand zu hoch sein, kann auch der mittlere gewichtete Fehler bestimmt werden.

Durch wenigstens einen bestimmten Parameter der Bahnkurve kann nun eine Korrektur des Signals des wenigstens einen Sensors erfolgen.

Beispielsweise kann die Krümmung $a_2$ des Polynoms nun zur Korrektur des Signals des wenigstens einen Sensors verwendet werden. Die Krümmung entspricht dann dem Krümmungsoffset, mit dem das Signal bzw. die daraus abgeleitete Krümmung behaftet ist.

Vorteilhaft sollten dann die bestimmten Parameter sowie die Bedingungen, unter denen diese bestimmt worden sind, auf Plausibilität untersucht werden. Folgende Plausibilitätskriterien bieten sich dafür an, die in nachfolgenden Schritten überprüft werden können:

Entsprechend dem Schritt 107 wird überprüft, ob eine Mindestanzahl von Wertepaaren mit Objektorten zur Approximation verwendet wird, Dies ist gleichbedeutend mit einer Überprüfung, daß die approximierte Distanz eine Mindestlänge aufweist.

Für die Fehlerbetrachtung kann weiterhin in einem Schritt 108 der Fehler $\Delta y$ ausgewertet werden. Abhängig von der Berechnungsart müssen die Grenzwerte der Fehlerbewertung angepaßt werden. Der Fehler sagt aus, wie gut die Bahnkurve an die Wertepaare angepaßt werden konnte. Ein großer Fehler bedeutet, daß auch die angegebenen Parameter beispielsweise $a_2$ und $a_0$ stark fehlerbehaftet sind.

Weiterhin wird in dem Schritt 109 überprüft, ob der bzw. die bestimmten Parameter bestimmte Maximalwerte und Minimalwerte nicht über- bzw. unterschreiten. Dadurch können vorteilhaft Ausreißer erkannt werden. Bei obigem Polynom werden hier also $a_2$ und $a_0$ geprüft.

Die in den Schritten 108 und 109 geprüften Parameter können bei Überschreiten der Grenzwerte entweder dazu führen, daß die komplette Messung des Objektes nicht zur statistischen Auswertung herangezogen wird oder ggf. nur schwach gewichtet in diese einfließt.

Im Schritt 110 werden die bestimmten Parameter in eine Verteilung zur statistischen Auswertung im Schritt 112 mit entsprechender Gewichtung bereit gestellt. Im weiteren Ablauf wird im Schritt 101 mit dem nächsten detektierten Objekt, das heißt mit der Auswertung des nächsten Satzes von aufgenommenen und erwarteten Objektorten (Objektspuren), fortgefahren. Sind alle Sätze von aufgenommenen und erwarteten Objektorten, das heißt alle Objektspuren, bearbeitet, erfolgt der Übergang zu dem Schritt 111, in dem überprüft wird, ob eine hinreichende Anzahl von Spurwinkelabweichungen (im vorliegenden Beispiel $a_2$ - Werte) berechnet worden ist. Diese Spurwinkelabweichungen können über einen längeren Zeitraum erfaßt worden sein.

Wenn eine hinreichende Anzahl berechnet worden ist, erfolgt im Schritt 112 eine statistische Auswertung der resultierenden Verteilung, indem eine Mittelwertbildung der ermittelten Spurwinkelabweichungen oder daraus abgeleiteter Größen vorgenommen wird. Weiterhin kann die Standardabweichung bestimmt werden. Eine Streuung der Parameter ist zu erwarten. Bei zu großer Standardabweichung kann der Parameter (im Beispiel der gemittelte $a_2$ - Wert) beispielsweise verworfen oder unter Vorbehalt verrechnet werden. Überschreiten die gemittelten Parameter vorgegebene Grenzwerte, wird ein Warnsignal ausgegeben.

Um also aus der ermittelten Differenzkrümmung (gemittelter $a_2$ - Wert) einen Offset in Grad bestimmen zu können, welcher dann als Korrekturwert vom Lenkwinkel subtrahiert werden kann, um einen fehlerbereinigten Lenkwinkel zu erreichen, ist noch eine Umrechnung erforderlich. Diese Umrechnung zur Korrektur des gemessenen Lenkwinkelsignals kann über die bekannte Fahrdynamikgleichung erfolgen:

$$R_{dyn} = i_{Lenkübersetzung} * 180° * (L_{Radstand} + EG_{Eigenlenkgradient} * \pi * (v_{Eigen})^2 / 180°) / (\phi_{Lenkwinkel} * \pi)$$

mit(in m).

Durch Umformung kann $\phi_{Lenkwinkel}$, welches dem Offset in Grad entspricht, bestimmt werden, sofern $R_{dyn} = 1 / (2 * a_2)$ gilt. Da die Größen $i_{Lenkübersetzung}$, $L_{Radstand}$ (m), $EG_{Eigenlenkgradient}$ (Grad*$s^2$/m) und $v_{Eigen}$ (m/s) bekannt sind, stellt dies kein Problem dar. Da ein Lenkwinkeloffsetfehler unabhängig von der Fahrzeuggeschwindigkeit ist, vereinfacht sich die Gleichung:

$$\phi_{Lenkwinkel,Offset} = 2 * a_2 * i_{Lenkübersetzung} * 180° * L_{Radstand} / \pi$$

Der Spurwinkel wird repräsentiert durch den Lenkwinkel unter Berücksichtigung der Übersetzung des Lenkgetriebes.

Die Korrektur eines Drehratensensors, welcher die Drehbewegung des Fahrzeuges um die Hochachse nach links und rechts erfaßt, erfolgt dann beispielsweise bei Anwendung dieses Korrekturverfahrens über

$$\text{Drehraten}_{\text{Offset}} = a_2 * v_{\text{Eigen}} * 360°/\pi \qquad \text{(in Grad/s)},$$

wobei $a_2$ der Differenzkrümmung entspricht und $v_{\text{Eigen}}$ der Fahrzeuggeschwindigkeit zum Zeitpunkt der Ermittlung der Differenzkrümmung.

In dem Schritt 113 wird überprüft, ob die Standardabweichung des gebildeten Mittelwertes kleiner ist als eine vorgegebene Schwelle. Ist dies der Fall, erfolgt ein Übergang zu dem Schritt 114, in dem der Mittelwert des Korrekturwertes geprüft wird. Übersteigt der Betrag einen Schwellwert, so kann ein Warnsignal ausgegeben werden. Dieser Korrekturwert wird im Schritt 115 zu einem gemessenen Lenkwinkel addiert, um ein den Spurwinkel des Fahrzeuges repräsentierendes Signal zu erhalten.

In dem beschriebenen Ausführungsbeispiel wird ein den Spurwinkel des Fahrzeuges repräsentierendes Signal aus dem gemessenen Lenkwinkel gewonnen. Es ist ersichtlich, daß mit dem erfindungsgemäßen Verfahren alle Signale fahrzeugbezogener Sensoren korrigiert werden können, aus denen eine Prognose der Bahnkurve abgeleitet werden kann, auf der sich das Fahrzeug bewegt. Solche Sensoren sind beispielsweise der gemessenen Spurwinkel, der gemessenen Lenkwinkel, die gemessene Drehrate um die Fahrzeughochachse (Gierrate) oder die Differenz der gemessenen Raddrehzahlsignale von Rädern unterschiedlicher Fahrzeugseiten.

Anstelle der konkret vorgegebenen Grenz- und Schwellwerte, die in den Ausführungsbeispielen genannt sind, können die entsprechenden Größen auch einer differenzierten Gewichtung der Ergebnisse in nachfolgenden Bearbeitungsschrittten unterzogen werden, um die Plausibilität des Ergebnisses zu überprüfen.

Figur 3 zeigt ein Fahrzeug 301. Zu diesem Fahrzeug 301 ist der sich ergebende Erfassungswinkel für den Radarsensor eingezeichnet. Zu diesem Fahrzeug sind Sätze von aufgenommenen Objektorten (Objektspuren) verschiedener Objekte vorhanden, die mit 302, 303, 304, 305 bezeichnet sind. Beispielhaft ist der Objektspur 303 zu entnehmen, daß die schwarzen Punkte den jeweiligen Objektorten zum aktuellen Zeitpunkt entsprechen. In der Objektspur 303 ist dies der Punkt 306. Die als Kreis gezeichneten Punkte sind die jeweiligen Objektorte zu vorhergehenden Zeitpunkten. Im Beispiel der Objektspur 303 sind diese Punkte mit 307 bezeichnet.

### Patentansprüche

1. Verfahren zur Korrektur eines Signals wenigstens eines Sensors, aufgrund dessen eine Bahnkurve ermittelbar ist, auf der sich das Fahrzeug bewegt,
dadurch gekennzeichnet, daß das Fahrzeug eine Einrichtung aufweist, mit der die Umgebung des Fahrzeuges erkannt werden kann und daß die Korrektur des Signals des wenigstens einen Sensors erfolgt, indem zu wenigstens einem Zeitpunkt der zu wenigstens einem weiteren Zeitpunkt erwartete Objektort eines als stehend erkannten Objektes bestimmt wird anhand der Fahrzeuggeschwindigkeit und des Signals des wenigstens einen Sensors und indem zu dem wenigstens einen weiteren Zeitpunkt der Objektort des als stehend erkannten Objektes aufgenommen wird, wobei eine Korrektur des Signals des wenigstens einen Sensors anhand der Abweichung des erwarteten Objektortes von dem aufgenommenen Objektort erfolgt (106).

2. Verfahren nach Anspruch 1,
dadurch gekennzeichnet, daß die Einrichtung die Umgebung mittels Radarstrahlen erkennt.

3. Verfahren nach Anspruch 1 oder 2,
dadurch gekennzeichnet, daß wenigstens ein Parameter einer Bahnkurve für die Abweichung der Kurve der erwarteten Objektorte von den aufgenommenen Objektorten bestimmt wird und daß anhand dieses wenigstens einen Parameters ein Korrekturwert für das Signal des wenigstens einen Sensors bestimmt wird (106, 112).

4. Verfahren nach einem der Ansprüche 1 bis 3,
dadurch gekennzeichnet, daß zu einem Satz von erwarteten und aufgenommenen Objektorten der wenigstens eine Parameter bestimmt wird und daß zu mehreren Sätzen von erwarteten und aufgenommenen Objektorten bestimmte Parameter gemittelt werden (111,112).

5. Verfahren nach Anspruch 4,
dadurch gekennzeichnet, daß der der zu einem Satz von erwarteten und aufgenommenen Objektorten bestimmte wenigstens eine Parameter zumindest bei Überschreitung eines gewissen Grenzwertes durch den wenigstens einen Parameter mit einer Gewichtung bei der Mittelung berücksichtigt wird (109).

**6.** Verfahren nach Anspruch 4 oder 5,
dadurch gekennzeichnet, daß zumindest bei Überschreitung einer Grenze durch einen Fehler (Δy), der sich als Abweichung der Bahnkurve aus den erwarteten und/oder aufgenommenen Objektorten zu der mit dem wenigstens einen Parameter berechneten Bahnkurve ergibt, der wenigstens eine Parameter mit einer Gewichtung bei der Mittelung berücksichtigt wird (108).

**7.** Verfahren nach einem der Ansprüche 4 bis 6,
dadurch gekennzeichnet, daß bei der Mittelung eine statistische Fehlerbetrachtung erfolgt, wobei bei Überschreiten eines Grenzwertes durch den Fehler der Korrekturwert ungültig wird und/oder ein Warnsignal ausgegeben wird (113).

**8.** Verfahren nach Anspruch 4,
dadurch gekennzeichnet, daß der wenigstens eine Parameter innerhalb eines Satzes nur dann bestimmt wird, wenn der maximale Betrag der Änderung des Signals des wenigstens einen Sensors während dieses Satzes kleiner ist als ein bestimmter Schwellwert (105).

**9.** Verfahren nach einem der Ansprüche 1 bis 8,
dadurch gekennzeichnet, daß der wenigstens eine Parameter innerhalb eines Satzes nur dann bestimmt wird, wenn der maximale Betrag des Signals des wenigstens einen Sensors während dieses Satzes kleiner ist als ein bestimmter Grenzwert (104).

**10.** Verfahren nach einem der Ansprüche 1 bis 9,
dadurch gekennzeichnet, daß das Signal des wenigstens einen Sensors den Spurwinkel des Fahrzeuges repräsentiert, der aus dem Lenkwinkel abgeleitet wird, wobei die Korrektur erfolgt, indem ein Offset addiert wird (114).

**11.** Verfahren nach Anspruch 10,
dadurch gekennzeichnet, daß ein Warnsignal ausgegeben wird, wenn der Betrag des ermittelten Korrekturwerts eine bestimmte Schwelle überschreitet (114).

**12.** Verfahren nach einem der Ansprüche 1 bis 11,
dadurch gekennzeichnet, daß die Entfernung zu dem als stehend erkannten Objekt größer ist als eine bestimmte Mindestentfernung (103).

**13.** Verfahren nach einem der Ansprüche 1 bis 12,
dadurch gekennzeichnet, daß die Entfernung zu dem als stehend erkannten Objekt geringer ist als eine bestimmte Maximalentfernung (103).

**14.** Verfahren nach einem der Ansprüche 3 bis 13,
dadurch gekennzeichnet, daß die Bahnkurve aus einer Mindestanzahl von erwarteten und aufgenommenen Objektorten bestimmt wird bzw. ein Satz von erwarteten und aufgenommen Objektorten aus einer Mindestanzahl von erwarteten und aufgenommenen Objektorten besteht (107).

Fig. 1

$$R = \frac{1}{2a_2}$$

Fig. 2

Fig. 3